# EUROPÄISCHE PATENTANMELDUNG

(11) **EP 4 296 035 A1**
(43) Veröffentlichungstag der Anmeldung: **27.12.2023**
(21) Anmeldenummer: 23165031.8
(22) Anmeldetag: 29.03.2023
(51) Int. Cl.: B29C 49/36, B29C 49/46, B29C 49/48, B29C 49/06, B29C 49/12, B29L 31/00

(54) **VORRICHTUNG UND VERFAHREN ZUM UMFORMEN VON KUNSTSTOFFVORFORMLINGEN ZU KUNSTSTOFFBEHÄLTNISSEN**

(30) Priorität: 15.07.2022 DE 102022117720
(71) Anmelder: Krones AG, 93073 Neutraubling (DE)
(72) Erfinder: Geltinger, Florian, 93073 Neutraubling (DE); Kindl, Norbert, 93073 Neutraubling (DE); Schlagenhaufer, Martin, 93073 Neutraubling (DE)
(74) Vertreter: Hannke Bittner & Partner mbB Regensburg

(57) **Zusammenfassung**

Vorrichtung (1) zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen bewegbaren und insbesondere drehbaren Transportträger (22) aufweist, an dem eine Vielzahl von Umformungsstationen (4) angeordnet ist, wobei diese Umformungsstationen (4) jeweils Blasformeinrichtungen (6) mit wenigstens zwei Blasformseitenteilen (6a, 6b) und einem Bodenteil aufweisen, welche einen Hohlraum ausbilden, innerhalb dessen die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (6) aufweisen, um die Kunststoffvorformlinge (10) mit dem fließfähigen Medium zu beaufschlagen, und die Vorrichtung (1) einen Reinraum aufweist, welcher von mehreren Wandungen begrenzt wird und innerhalb dessen die Kunststoffvorformlinge (10) zu den Kunststoffbehältnissen (15) expandiert werden. Erfindungsgemäß ist ein Durchmesser (D) des Transportträgers (22) kleiner als 2 m und an dem Transportträger (22) sind 4 - 16 Umformungsstationen (4) angeordnet, oder ein Durchmesser (D) des Transportträgers (22) kleiner als 3 m ist und an dem Transportträger (22) sind 17 - 35 Umformungsstationen (4) angeordnet.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden die Kunststoffvorformlinge üblicherweise innerhalb einer Umformungsstation und genauer innerhalb einer Blasformeinrichtung durch Beaufschlagung mit einem fließfähigen Medium zu den Kunststoffbehältnissen umgeformt. Die Blasformeinrichtungen weisen dabei üblicherweise zwei Blasformseitenteile und ein Bodenteil auf, welche gemeinsam einen Hohlraum ausbilden, welcher einer Negativkontur des fertigen Kunststoffbehältnisses entspricht. In jüngerer Zeit sind auch Vorrichtungen und Verfahren bekannt geworden, bei denen die Umformung der Kunststoffvorformlinge zu den Kunststoffbehältnissen innerhalb eines Reinraumes erfolgt. Auf diese Weise ist es beispielsweise möglich, dass bereits der gesamte Umformungsprozess unter sterilen Bedingungen erfolgt und daher anschließend die gefertigten Kunststoffbehältnisse nicht erneut oder nur mit verringertem Aufwand sterilisiert werden müssen. Aus dem Stand der Technik sind weiterhin sog. Blasformmaschinen bekannt, welche während des Blasvorgangs die Kunststoffvorformlinge auch in ihrer Längsrichtung dehnen. Hierbei handelt es sich insbesondere um sog. Streckblasmaschinen.

Eine Vielzahl von Umformungsstationen ist dabei an einem bewegbaren und insbesondere drehbaren Transportträger angeordnet. Der (Teilkreis-) Durchmesser des Transportträgers ist dabei im Verhältnis zu der Anzahl der Umformungsstationen, welche an dem Transportträger angeordnet ist, sehr hoch. Beispielsweise ist es aus dem internen Stand der Technik der Anmelderin bekannt, dass an einem Transportträger mit einem Durchmesser von 2,3 m lediglich 12 - 16 Umformungsstationen angeordnet sind und bei einem Durchmesser von 3,4 m 20 - 24 Umformungsstationen.

Es wird daher im internen Stand der Technik der Anmelderin für eine vergleichsweise geringe Anzahl an Umformungsstationen sehr viel Platz benötigt, was zu einem großen "Footprint" der Anlage und erhöhten Kosten führt. Ist der Transportträger dabei innerhalb eines Reinraums angeordnet muss auch dieser entsprechend groß ausgebildet sein und mit einer großen Menge an beispielsweise H₂O₂ steril gehalten werden.

Der vorliegenden Erfindung liegt daher die Aufgabe zugrunde, den "Footprint" einer Anlage zum Umformen von Kunststoffvorformlingen zu Kunststoffbehältnisses zu verringern, um hierdurch eine Kosten- und Platzeinsparung zu erreichen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen bewegbaren und insbesondere drehbaren Transportträger aufweist, an dem eine Vielzahl von Umformungsstationen angeordnet ist, wobei diese Umformungsstationen jeweils Blasformeinrichtungen mit wenigstens zwei Blasformseitenteilen und einem Bodenteil aufweisen, welche einen Hohlraum ausbilden, innerhalb dessen die Kunststoffvorformlinge durch Beaufschlagung mit einem fließfähigen Medium zu den Kunststoffbehältnissen umformbar sind und die Umformungsstationen jeweils Beaufschlagungseinrichtungen aufweisen, um die Kunststoffvorformlinge mit dem fließfähigen Medium zu beaufschlagen, und die Vorrichtung einen Reinraum aufweist, welcher von mehreren Wandungen begrenzt wird und innerhalb dessen die Kunststoffvorformlinge zu den Kunststoffbehältnissen expandiert werden.

Erfindungsgemäß ist ein Durchmesser des Transportträgers kleiner als 2 m und an dem Transportträger sind 4 - 16 Umformungsstationen angeordnet, oder ein Durchmesser des Transportträgers ist kleiner als 3 m und an dem Transportträger sind 17 - 35 Umformungsstationen angeordnet. Besonders bevorzugt sind dabei zwischen 4 - 16 Umformungsstationen auf einem Transportträger mit einem Durchmesser von größer oder gleich 0,5 m und kleiner oder gleich 2 m angeordnet und/oder zwischen 17 - 35 Umformungsstationen auf einem Transportträger mit einem Durchmesser von größer oder gleich 2,1 m und kleiner oder gleich 3 m.

Es wird demnach erfindungsgemäß vorgeschlagen, die Anzahl der Umformungsstationen auf einem Transportträger zu erhöhen bzw. an einen kleineren Transportträger mehrere Umformungsstationen als bisher anzuordnen. Dies führt, im Vergleich zu den bisher aus dem Stand der Technik der Anmelderin bekannten Blasformmaschinen, zu einem geringeren Footprint bzw. Platzbedarf der Anlage und einer hiermit verbundenen Kosteneinsparung.

Bei der Vorrichtung zum Umformen von Kunststoffvorformlingen zu Kunststoffbehältnissen handelt es sich bevorzugt um eine Blasformmaschine. Bei einer vorteilhaften Ausführungsform ist eine Vielzahl von Blasformeinrichtungen an einem gemeinsamen beweglichen Transportträger angeordnet. Bei diesem Träger handelt es sich dabei insbesondere um einen drehbaren Träger und insbesondere ein Blasrad.

Die Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Vorteilhaft ist eine Vielzahl derartige Blasformeinrichtungen innerhalb einer Blasmaschine und besonders bevorzugt innerhalb einer Streckblasmaschine angeordnet. Dies bedeutet, dass die Kunststoffvorformlinge durch Beaufschlagung mit Druckluft zu den Kunststoffbehältnissen expandiert werden. Dazu weist die Vorrichtung bevorzugt eine Blasdüse auf, welche an eine Mündung der Kunststoffvorformlinge anlegbar ist, um die Kunststoffvorformlinge so mit Blasluft zu beaufschlagen bzw. mittels Blasluft zu expandieren. Alternativ ist es auch denkbar, dass die Blasdüse an dem Tragring und/oder der Blasform dichtend angelegt wird. Daneben ist bevorzugt auch eine Ventilanordnung vorgesehen, welche die Zuführung der Blasluft an die Kunststoffvorformlinge steuert.

Bei einer weiteren vorteilhaften Ausführungsform weisen die Blasformeinrichtungen bzw. die Umformungsstationen jeweils Reckstangen auf, welche die Kunststoffvorformlinge in ihrer Längsrichtung dehnen. Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen befinden sich dabei bevorzugt außerhalb des Reinraums angeordnet.

Die Blasformeinrichtungen werden dabei bevorzugt innerhalb des Reinraums transportiert, wobei der Reinraum bevorzugt von mehreren Wandungen begrenzt wird. Bevorzugt wird der Reinraum dabei von wenigstens einer stehenden Wandung und einer sich gegenüber dieser stehenden Wandung bewegenden Wandung begrenzt. Dabei kann beispielsweise der Transportträger, an dem die Blasformeinrichtungen angeordnet sind, bereits eine dieser Wandungen und insbesondere die sich bewegende Wandung aufweisen bzw. ausbilden. Der Reinraum grenzt die Blasformeinrichtungen dabei insbesondere von einer unsterilen Umgebung ab.

Bei einem weiteren bevorzugten Verfahren werden Teile der Blasformeinrichtung temperiert. Insbesondere werden Teile der Blasformeinrichtung erwärmt. Bevorzugt erfolgt dabei diese Erwärmung mittels elektrischer Energie oder mittels eines fließfähigen und insbesondere flüssigen Temperiermediums. So kann beispielsweise heißes Öl oder Wasser verwendet werden, um die Seitenteile der Blasform und/oder das Bodenteil der Blasform zu temperieren. Dabei kann dieses Temperieren mittels Kanälen erfolgen, welche in der Blasform selbst angeordnet sind und/oder auch mittels Kanälen, welche in Blasformschalen angeordnet sind und/oder auch in einem Blasformträger.

Die einzelnen an dem Transportträger angeordneten Umformungsstationen weisen bevorzugt jeweils einen Abstand zwischen 0,05 m und 1 m, bevorzugt zwischen 0,06 m und 0,8 m und besonders bevorzugt zwischen 0,07 m und 0,5 m zueinander auf. Besonders bevorzugt weisen die einzelnen Umformungsstationen bei einem Durchmesser des Transportträgers von kleiner 2 m einen Abstand zwischen 0,08 m und 0,6 m, bevorzugt zwischen 0, 1 m und 0,5 m zueinander auf oder bei einem Durchmesser des Transportträgers von kleiner 3 m einen Abstand zwischen 0,05 m und 0,2 m, bevorzugt 0,07 m und 0,18m zueinander auf. Der genaue Abstand der Umformungsstationen zueinander ist dabei abhängig von dem genauen Durchmesser des Transportträgers und der Anzahl der Umformungsstationen. Beispielsweise beträgt der Abstand der einzelnen Umformungsstationen bei einem Transportträger mit einem Durchmesser von 1,7 m und 14 Umformungsstationen ungefähr 0,12 m und bei einem Transportträger mit einem Durchmesser von 2,3 m und 22 Umformungsstationen ungefähr 0,1 m.

Bei einer bevorzugten Ausführungsform sind die Blasformseitenteile jeweils an einem ersten Formträger und einem zweiten Formträger angeordnet, welche zum Öffnen und/oder Schließen gegenüber einer Schwenkachse bewegbar sind. Die Blasformseitenteile sind dabei bevorzugt austauschbar and den Formträgern angeordnet. Bevorzugt ist auch das Bodenteil, insbesondere austauschbar, an einem Bodenteilträger angeordnet.

Bei einer weiteren bevorzugten Ausführungsform erfolgt eine Öffnungs- und/oder Schließbewegung des ersten Formträgers um einen ersten Winkel und eine Öffnungs- und/oder Schließbewegung des zweiten Formträgers um einen zweiten Winkel, wobei der erste Winkel und der zweite Winkel im Wesentlichen identisch sind.

Bevorzugt führen demnach die beiden Formträger eine identische Bewegung aus. Beide Formträger sind demnach bevorzugt beweglich ausgebildet bzw. angeordnet. Dies ist insbesondere vorteilhaft, da hierdurch weniger Platz für die Öffnungsbewegung benötigt wird. Die Öffnungs- und/oder Schließbewegung der Formträger trägt demnach auch dazu bei, dass die Umformungsstationen näher zueinander angeordnet werden können und somit der Durchmesser des Transportträgers verringert werden kann.

Bevorzugt sind die Formträger an einer stationären Schwenkachse bzw. Schwenkwelle angeordnet bzw. gelagert und gegenüber dieser bewegbar. Die Schwenkachse verbindet dabei bevorzugt beide Formträger (mechanisch) miteinander. Vorteilhaft rotieren beide Formträger bezogen auf eine feststehende Lagerachse der Schwenkachse um den im Wesentlichen gleichen Winkel. Zwischen der Lagerachse und den Formträgern sind bevorzugt Lagerelemente in Form von abgedichteten Wälzlagern oder Gleitlagern angeordnet.

Besonders bevorzugt erfolgt die Öffnungs- und Schließbewegung der Formträger spiegelbildlich um eine geometrische Symmetrieachse. Bei der Öffnungs- und Schließbewegung der Formträger handelt es sich dabei bevorzugt um eine Schwenkbewegung und insbesondere eine Schwenkbewegung um einen vorgegebenen Winkel.

Die Bewegung der Formträger wird bevorzugt über wenigstens eine Führungskurve gesteuert. Das Öffnen der Formträger dient bevorzugt insbesondere dazu, einen Kunststoffvorformling in die Blasformeinrichtung einzusetzen und nach der Umformung ein umgeformtes Kunststoffbehältnis wieder aus der Blasformeinrichtung entnehmen zu können. Auch zum Austauschen der Blasformteile, wie die Blasformseitenteile und das Bodenteil, ist ein Öffnen der Formträger erforderlich. Das Öffnen und Schließen der Formträger wird daher bevorzugt in bestimmten bzw. vorgegebenen Winkelbereichen des Transportträgers vorgenommen.

Dass die Öffnungs- und/oder Schließbewegung des ersten Formträgers um einen ersten Winkel und die Öffnungs- und/oder Schließbewegung des zweiten Formträgers um einen zweiten Winkel im Wesentlichen identisch sind, bedeutet dabei, dass die Öffnungs- und/oder Schließbewegung des ersten Formträgers um den ersten Winkel und die Öffnungs- und/oder Schließbewegung des zweiten Formträgers um den zweiten Winkel um nicht mehr als 3° - 10°, bevorzugt um nicht mehr als 2° - 7° und besonders bevorzugt um nicht mehr als 1° - 5° voneinander abweichen. Der Öffnungswinkel zwischen den beiden Formträgern liegt dabei bevorzugt zwischen 0 und 150 Grad.

Bei einer bevorzugten Ausführungsform weist die Vorrichtung eine Dichtungsvorrichtung auf, um den Reinraum gegenüber einer unsterilen Umgebung abzudichten. Insbesondere wird dabei durch diese Dichtungseinrichtung verhindert, dass unsterile Umgebungsluft und Keime in den Reinraum gelangen und diesen kontaminieren.

Bei einer weiteren bevorzugten Ausführungsform weist die Dichtungseinrichtung wenigstens einen mit einer Flüssigkeit befüllbaren umlaufenden Kanal auf, in welchen eine umlaufende Wandung ragt, wobei es sich bei dieser Wandung bevorzugt um wenigstens ein Schwert und besonders bevorzugt um genau ein Schwert handelt. Es wird demnach vorgeschlagen zur Abdichtung des Reinraums ein sogenanntes Wasserschloss zu verwenden und insbesondere ein einfaches Wasserschloss, welches genau ein Schwert aufweist, welches in das fließfähige Medium eintaucht und so einen unsterilen Bereich von dem sterilen Bereich trennt. Durch die Verwendung eines einfachen Wasserschlosses, im Gegensatz zu einem doppelten Wasserschloss, kann ebenfalls ein kleinerer Footprint der Anlage ermöglicht werden, da dieses weniger Platz benötigt.

Die umlaufende Wandung der Dichtungseinrichtung ist dabei bevorzugt drehbar bezüglich des Kanals ausgebildet. Bevorzugt ist dabei die Drehbewegung dieser Wandung an die Drehbewegung des Transportträgers gekoppelt. Bei dieser Wandung handelt es sich damit bevorzugt um ein umlaufendes Schwert, welches einen Bestandteil des Wasserschlosses, bzw. der hydraulischen Dichtung bildet. Besonders bevorzugt taucht diese Wandung in die in dem Kanal befindliche Flüssigkeit. Es wäre umgekehrt auch denkbar, dass der Kanal drehbar ist und die umlaufende Wandung stationär ausgebildet ist.

Bevorzugt ist der umlaufende Kanal durch die umlaufende Wandung der Dichtungseinrichtung in einem radial inneren Kanalabschnitt und einem radial äußeren Kanalabschnitt unterteilt, wobei das Schwert bevorzugt in einen Bereich zwischen dem inneren Kanalabschnitt und dem äußeren Kanalabschnitt in die Flüssigkeit eintaucht.

Bei einer bevorzugten Ausführungsform weist eine Umformungsstation eine Stationsleistung zwischen 2500 und 2800 Kunststoffbehältnissen pro Stunde auf. Mit anderen Worten können mit einer Umformungsstation zwischen 2500 und 2800 Kunststoffbehältnissen pro Stunde umgeformt werden.

Bei einer weiteren bevorzugten Ausführungsform weist die Vorrichtung eine Anlagenleistung zwischen 10.000 und 85.000 Kunststoffbehältnissen pro Stunde auf. Die Anlagenleistung ist dabei insbesondere abhängig von der Anzahl der Umformungsstationen der Vorrichtung.

Die vorliegende Erfindung ist weiterhin auf eine Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen bewegbaren und insbesondere drehbaren Transportträger aufweist, an dem eine Vielzahl von Umformungsstationen angeordnet ist, wobei diese Umformungsstationen jeweils Blasformeinrichtungen mit wenigstens zwei Blasformseitenteilen und einem Bodenteil aufweisen, welche einen Hohlraum ausbilden, innerhalb dessen die Kunststoffvorformlinge durch Beaufschlagung mit einem fließfähigen Medium zu den Kunststoffbehältnissen umformbar sind und die Umformungsstationen jeweils Beaufschlagungseinrichtungen aufweisen, um die Kunststoffvorformlinge mit dem fließfähigen Medium zu beaufschlagen. Weiterhin weist die Vorrichtung einen Reinraum auf, welcher von mehreren Wandungen begrenzt wird und innerhalb dessen die Kunststoffvorformlinge zu den Kunststoffbehältnissen expandiert werden.

Erfindungsgemäß ist ein Verhältnis zwischen einem Durchmesser des Transportträgers und einer Anzahl der Umformungsstationen kleiner als 0,14, bevorzugt kleiner als 0,13 und besonders bevorzugt kleiner als 0,12. Diese Verhältnisse sind vorteilhaft, da so ein optimales Verhältnis zwischen der Anzahl der Umformungsstationen und der Größe des Transportträgers ermöglicht wird, um diese möglichst klein zu wählen und somit den Platzbedarf zu reduzieren. Durch das Einhalten dieser Verhältnisse können somit mehrere Stationen auf einer kleineren Plattform bzw. einem kleineren Transportträger angeordnet werden.

Bevorzugt ist dabei ein Verhältnis zwischen einem Durchmesser des Transportträgers und einer Anzahl der Umformungsstationen größer als größer als 0,35, bevorzugt größer als 0,2. Besonders bevorzugt ist ein Verhältnis zwischen einem Durchmesser des Transportträgers und einer Anzahl der Umformungsstationen kleiner als 0,14, oder größer als 0,2.

Die vorliegende Erfindung ist weiter auf ein Verfahren zum Betreiben einer Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen bewegbaren und insbesondere drehbaren Transportträger aufweist, an dem eine Vielzahl von Umformungsstationen angeordnet ist, wobei diese Umformungsstationen jeweils Blasformeinrichtungen mit wenigstens zwei Blasformseitenteilen und einem Bodenteil aufweisen, welche einen Hohlraum ausbilden innerhalb dessen die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit dem fließfähigen Medium beaufschlagen, und ein Reinraum vorgesehen ist, welcher von mehreren Wandungen begrenzt wird und innerhalb dessen die Kunststoffvorformlinge zu den Kunststoffbehältnissen expandiert werden.

Erfindungsgemäß ist ein Durchmesser des Transportträgers kleiner als 2 m und an dem Transportträger sind 4 - 16 Umformungsstationen angeordnet, oder ein Durchmesser des Transportträgers ist kleiner als 3 m und an dem Transportträger sind 17 - 35 Umformungsstationen angeordnet.

Dabei ist die oben beschriebene Vorrichtung insbesondere dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus der beigefügten Zeichnung.

Darin zeigt:

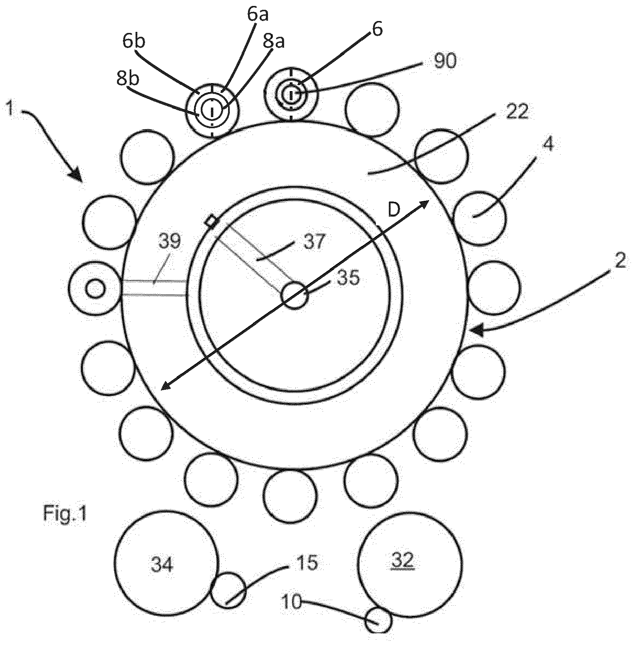

- Fig. 1: eine schematische Darstellung einer erfindungsgemäßen Vorrichtung.

Fig. 1 zeigt eine schematische Darstellung einer erfindungsgemäßen Vorrichtung 1. Dabei weist die Vorrichtung 1 eine Zuführeinrichtung 32, wie insbesondere einen Transportstern oder ein Transportrad 32 auf, welche der Vorrichtung Kunststoffvorformlinge 10 zuführt. Das Bezugszeichen 34 kennzeichnet eine Abführeinrichtung, insbesondere einen Transportstern, der die gefertigten Kunststoffbehältnisse 15 von der Vorrichtung 1 abführt.

Die Vorrichtung weist eine Transporteinrichtung 2 mit einem drehbaren Transportträger 22 auf, an dem eine Vielzahl von Umformungsstationen 4 angeordnet ist. Das Bezugszeichen D kennzeichnet den Durchmesser des Transportträgers 22. Die Umformungsstation 4 weisen dabei jeweils eine Blasformeinrichtung 6 auf, sowie auch Reckstangen, 90, die in die Kunststoffvorformlinge einführbar sind, um diese in ihrer Längsrichtung zu dehnen. Die Blasformeinrichtung 6 weist zwei Blasformseitenteile 6a, 6b auf, welche jeweils an einem ersten Formträger 8a und einem zweiten Formträger 8b angeordnet sind.

Das Bezugszeichen 35 kennzeichnet einen Drehverteiler, mittels dessen an die einzelnen Umformungsstation Druckluft zugeführt werden kann. Das Bezugszeichen 37 kennzeichnet eine Verbindungsleitung, welche ein erstes Druckreservoir mit Druckluft beaufschlagt. Über einzelne Verbindungsleitungen 39 (nur eine gezeigt) können die Umformungsstationen 4 mit der Druckluft und insbesondere auch unterschiedlichen Druckstufen versorgt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Transporteinrichtung
- 4: Umformungsstationen
- 6: Blasformeinrichtung
- 6a, 6b: Blasformseitenteile
- 8a: erster Formträger
- 8b: zweiter Formträger
- 10: Kunststoffvorformlinge
- 15: Kunststoffbehältnisse
- 22: Transportträger
- 32: Zuführeinrichtung
- 34: Abführeinrichtung
- 35: Drehverteiler
- 37: Verbindungsleitung
- 39: einzelne Verbindungsleitungen
- 90: Reckstangen

- D: Durchmesser des Transportträgers 22

## Patentansprüche

1. Vorrichtung (1) zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen bewegbaren und insbesondere drehbaren Transportträger (22) aufweist, an dem eine Vielzahl von Umformungsstationen (4) angeordnet ist, wobei diese Umformungsstationen (4) jeweils Blasformeinrichtungen (6) mit wenigstens zwei Blasformseitenteilen (6a, 6b) und einem Bodenteil aufweisen, welche einen Hohlraum ausbilden, innerhalb dessen die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (6) aufweisen, um die Kunststoffvorformlinge (10) mit dem fließfähigen Medium zu beaufschlagen, und die Vorrichtung (1) einen Reinraum aufweist, welcher von mehreren Wandungen begrenzt wird und innerhalb dessen die Kunststoffvorformlinge (10) zu den Kunststoffbehältnissen (15) expandiert werden,
**dadurch gekennzeichnet, dass**
- ein Durchmesser (D) des Transportträgers (22) kleiner als 2 m ist und an dem Transportträger (22) 4 - 16 Umformungsstationen (4) angeordnet sind, oder
- ein Durchmesser (D) des Transportträgers (22) kleiner als 3 m ist und an dem Transportträger (22) 17 - 35 Umformungsstationen (4) angeordnet sind.

2. Vorrichtung (1) nach Anspruch 1,
**dadurch gekennzeichnet, dass**
die Blasformseitenteile (6a, 6b) jeweils an einem ersten Formträger (8a) und einem zweiten Formträger (8b) angeordnet sind, welche zum Öffnen und/oder Schließen gegenüber einer Schwenkachse bewegbar sind.

3. Vorrichtung (1) nach Anspruch 2,
**dadurch gekennzeichnet, dass**
eine Öffnungs- und/oder Schließbewegung des ersten Formträgers (8a) um einen ersten Winkel erfolgt und eine Öffnungs- und/oder Schließbewegung des zweiten Formträgers (8b) um einen zweiten Winkel, wobei der erste Winkel und der zweite Winkel im Wesentlichen identisch sind.

4. Vorrichtung (1) nach Anspruch 1,
**dadurch gekennzeichnet, dass**
die Vorrichtung (1) eine Dichtungsvorrichtung aufweist, um den Reinraum gegenüber einer unsterilen Umgebung abzudichten.

5. Vorrichtung (1) nach Anspruch 4,
**dadurch gekennzeichnet, dass**
die Dichtungseinrichtung wenigstens einen mit einer Flüssigkeit befüllbaren umlaufenden Kanal aufweist, in welchen eine umlaufende Wandung ragt, wobei es sich bei dieser Wandung bevorzugt um wenigstens ein Schwert handelt.

6. Vorrichtung (1) nach Anspruch 1,
**dadurch gekennzeichnet, dass**
die Umformungsstation (4) eine Stationsleistung zwischen 2500 und 2800 Kunststoffbehältnissen (15) pro Stunde aufweist.

7. Vorrichtung (1) nach Anspruch 1,
**dadurch gekennzeichnet, dass**
die Vorrichtung (1) eine Anlagenleistung zwischen 10.000 und 85.000 Kunststoffbehältnissen (15) pro Stunde aufweist.

8. Verfahren zum Betreiben einer Vorrichtung (1) zum Umformen von Kunststoffvorformlingen (10) zu Kunststoffbehältnissen (15), mit einer Transporteinrichtung (2), welche die umzuformenden Kunststoffvorformlinge (10) entlang eines vorgegebenen Transportpfads transportiert, wobei die Transporteinrichtung (2) einen bewegbaren und insbesondere drehbaren Transportträger (22) aufweist, an dem eine Vielzahl von Umformungsstationen (4) angeordnet ist, wobei diese Umformungsstationen (4) jeweils Blasformeinrichtungen (6) mit wenigstens zwei Blasformseitenteilen (6a, 6b) und einem Bodenteil aufweisen, welche einen Hohlraum ausbilden innerhalb dessen die Kunststoffvorformlinge (10) durch Beaufschlagung mit einem fließfähigen Medium zu den Kunststoffbehältnissen (15) umgeformt werden und die Umformungsstationen (4) jeweils Beaufschlagungseinrichtungen aufweisen, welche die Kunststoffvorformlinge (10) mit dem fließfähigen Medium beaufschlagen, und ein Reinraum vorgesehen ist, welcher von mehreren Wandungen begrenzt wird und innerhalb dessen die Kunststoffvorformlinge (10) zu den Kunststoffbehältnissen (15) expandiert werden, **dadurch gekennzeichnet, dass**
- ein Durchmesser (D) des Transportträgers (22) kleiner als 2 m ist und an dem Transportträger (22) 4 - 16 Umformungsstationen (4) angeordnet sind, oder
- ein Durchmesser (D) des Transportträgers (22) kleiner als 3 m ist und an dem Transportträger (22) 17 - 35 Umformungsstationen (4) angeordnet sind.

9. Vorrichtung (1) zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen bewegbaren und insbesondere drehbaren Transportträger (22) aufweist, an dem eine Vielzahl von Umformungsstationen (4) angeordnet ist, wobei diese Umformungsstationen (4) jeweils Blasformeinrichtungen (6) mit wenigstens zwei Blasformseitenteilen (6a, 6b) und einem Bodenteil aufweisen, welche einen Hohlraum ausbilden, innerhalb dessen die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (6) aufweisen, um die Kunststoffvorformlinge (10) mit dem fließfähigen Medium zu beaufschlagen, und die Vorrichtung (1) einen Reinraum aufweist, welcher von mehreren Wandungen begrenzt wird und innerhalb dessen die Kunststoffvorformlinge (10) zu den Kunststoffbehältnissen (15) expandiert werden,
**dadurch gekennzeichnet, dass**
ein Verhältnis zwischen einem Durchmesser (D) des Transportträgers (22) und einer Anzahl der Umformungsstationen (4) kleiner ist als 0,14, bevorzugt kleiner als 0,13 und besonders bevorzugt kleiner als 0,12.
